**Europäisches Patentamt**

**European Patent Office**

**Office européen des brevets**

(19)

(11) **EP 1 191 516 A2**

(12) **EUROPÄISCHE PATENTANMELDUNG**

(43) Veröffentlichungstag:
**27.03.2002 Patentblatt 2002/13**

(51) Int Cl.7: **G10L 13/08**, G10L 15/04

(21) Anmeldenummer: **01120350.2**

(22) Anmeldetag: **24.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **22.09.2000 DE 10047172**

(71) Anmelder: **SIEMENS AKTIENGESELLSCHAFT**
**80333 München (DE)**

(72) Erfinder:
• **Müller, Achim**
**81739 München (DE)**
• **Zimmermann, Hans-Georg, Dr.**
**82319 Starnberg/Percha (DE)**

(54) **Verfahren zur Sprachverarbeitung**

(57)   Die Erfindung betrifft ein Verfahren zur Sprachverarbeitung, bei dem Sprachmerkmale enthaltende Eingangsgrößen auf Ausgangsgrößen abgebildet werden. Bei der Abbildung werden die Eingangsgrößen gewichtet und/oder es werden gleiche Abbildungen für unterschiedliche Sätze von Eingangsgrößen und mindestens eine Ausgangsgröße erzeugt.

**FIG 1**

**Beschreibung**

Die Erfindung betrifft Verfahren, eine Anordnung und ein Computerprogrammprodukt zur Sprachverarbeitung.

Verfahren und Anordnungen zur Sprachverarbeitung sind etwa aus US 6 029 135, US 5 732 388, DE 19636739 C1 und DE 19719381 C1 bekannt. Insbesondere die Realisierung multilingualer und sprachraumunabhängiger Sprachsynthesesysteme basiert zu einem großen Teil auf datengetriebenen Modulen. Diese Module, zum Beispiel Prosodiegenerierungsmodule, verwenden in der Regel Lernverfahren. Die Lernverfahren können im Allgemeinen gut für mehrere Sprachen und Anwendungen eingesetzt werden. Jedoch müssen oft die Eingangsgrößen mühsam per Hand optimiert werden.

Für den Fall der symbolischen Prosodie, also insbesondere der Phrasengrenzenvorhersage und der Vorhersage akzentuierter Wörter z.B. durch entsprechende Grundfrequenzerzeugung, sind die folgenden Lerntechniken angewandt worden: Für die Phrasengrenzvorhersage Ansätze, die auf Klassifikations- und Regressionsbäumen (CARTs) basieren von Julia Hirschberg und Pilar Prieto: "Training Intonational Phrasing Rules Automatically for English and Spanish Text-to-speech", Speech Communication, 18, S. 281-290, 1996, und Michell Q. Wang und Julia Hirschberg: "Automatic Classification of Intonational Phrasing Boundaries" Computer Speech and Language, 6, S. 175-196, 1992, Ansätze, die auf Hidden-Markov-Modellen (HMM) basieren von Alan W. Black und Paul Taylor: "Assigning Phrase Breaks from Part-of-Speech Sequences", Eurospeech, 1997, und Ansätze, die auf Neuronalen Netzen basieren von Achim F. Müller, Hans Georg Zimmermann und Ralf Neuneier: "Robust Generation of Symbolic Prosody by a Neural Classifier Based on autoassociators", ICASSP, 2000. Für die Vorhersage von Akzenten oder akzentuierten Wörtern wurden CARTs verwendet von Julia Hirschberg: "Pitch Accent in Context: Predicting Prominence from Text", Artificial Intelligence, 63, S. 305-340, 1993, wohingegen Neuronale Netze eingesetzt wurden von Christina Widera, Thomas Portele und Maria Wolters: "Prediction of Word Prominence", Eurospeech 1997. Eine Interpretation des Einflusses der verwendeten Eingangsgrößen ist dabei in der Regel nicht möglich. Dies gilt insbesondere für neuronale Netze. Für den Fall der Grundfrequenzerzeugung (f0-Generierung) ist dieses Problem auch bekannt. So werden zum Beispiel in Gerit P. Sonntag, Thomas Portele und Barbara Heruft: "Prosody Generation with a Neural Network: Weighing the Importance of Input Parameters", ICASSP, 1997, die Eingangsgrößen heuristisch optimiert.

Davon ausgehend liegt der Erfindung die Aufgabe zugrunde, Sprachverarbeitungsverfahren dadurch zu verbessern, dass bei der Abbildung von Sprachmerkmale enthaltenden Eingangsgrößen auf Ausgangsgrößen eine höhere Berücksichtigung der wichtigen Eingangsgrößen erfolgt. Weiterhin sollen ein Verfahren, eine Anordnung und ein Computerprogrammprodukt angegeben werden, bei denen sich die Abbildung der Eingangsgrößen auf die Ausgangsgrößen genauer und schneller ermitteln lässt.

Diese Aufgabe wird durch Verfahren, eine Anordnung und ein Computerprogrammprodukt mit den Merkmalen der unabhängigen Ansprüche gelöst.

Dabei werden die Eingangsgrößen mit unterschiedlichen Gewichten auf die erzeugten Ausgangsgrößen abgebildet. Durch die Gewichte kann die Wichtigkeit einzelner Eingangsgrößen berücksichtigt werden. Die Gewichte lassen sich dabei in beliebiger Form ausbilden, so zum Beispiel durch Multiplikation mit einem Faktor, durch Addition eines Summanden oder durch eine beliebige Funktion, die bei Anwendung auf die Eingangsgröße diese entsprechend abändert.

Gemäß der Erfindung werden die Gewichte nicht mehr heuristisch gefunden, sondern die Abbildung der erzeugten Ausgangsgröße (Ist-Zustand) wird mit der Abbildung der zu erzeugenden Ausgangsgröße (Soll-Zustand) verglichen. Daraus wird eine Änderungsvorschrift für die Abbildung berechnet, wobei diese Änderungsvorschrift mit der Maßgabe, das heißt ganz gezielt, so berechnet wird, dass die Gewichte von Eingangsgrößen verringert werden, die einen geringen Einfluss auf die Ausgangsgröße haben. Ein geringer Einfluss heißt, dass die Eingangsgröße wenig relevante Informationen trägt. Solch ein geringer Einfluss stellt sich zum Beispiel dadurch dar, dass sich bei einer großen Änderung der Eingangsgröße die Ausgangsgröße nur gering ändert, oder dass sich die Ausgangsgröße stark ändert, obwohl die Eingangsgröße konstant bleibt.

Insbesondere ist es vorteilhaft, die Verringerung der Gewichte in Abhängigkeit vom Wert anderer Gewichte vorzunehmen. Dies ergibt sich daraus, dass nicht die absolute Größe der Gewichte maßgebend ist, sondern die Gewichtung der Eingangsgrößen in Relation zueinander. Die anderen Gewichte können dabei selektiv oder vollständig berücksichtigt werden. Ein Aufsummieren über die anderen Gewichten ist dabei ebenso denkbar wie eine Mittelwertbildung. Je nach Ausprägung der Gewichte können auch nur deren Beträge berücksichtigt werden, zum Beispiel indem diese quadriert werden.

Die Verringerung der Gewichte lässt sich in einfacher Weise mit einer vorgebbaren Verringerungsrate steuern. Es ist deshalb vorteilhaft, eine solche in das Verfahren aufzunehmen.

Enthält die Abbildung mehrere Abbildungsschichten, zum Beispiel in Form von mehreren miteinander verknüpften Funktionen oder auch in Form von Schichten eines Neuronalen Netzes, so wird die Gewichtung vorzugsweise bei der ersten Abbildungsschicht vorgenommen. Dadurch erhält man die am besten interpretierbaren Ergebnisse.

Insbesondere wird die Gewichtung einer Eingangsgröße vorgenommen, bevor sie mit ein einer anderen Eingangsgröße verrechnet wird. Um den Rechenbedarf zu verringern, können Gewichte, die unterhalb eines bestimmten Schwellwertes liegen, auf Null gesetzt werden. Das heißt, dass die zugehörige Eingangsgröße in der Abbildung nicht mehr berücksichtigt wird.

Sogenannte Ausreißer bei den Eingangsgrößen, die besonderes hohe Werte aufweisen, lassen sich dadurch unterdrücken, dass die Abbildung für die entsprechende Eingangsgröße eine Übertragungsfunktion aufweist, die für betragsmäßig große Werte der Eingangsgröße eine geringe Steigung aufweist.

Damit die Ausreißer nur einen geringen Einfluss auf die restliche Abbildung haben, wird diese Übertragungsfunktion bevorzugt als erstes auf die Eingangsgrößen angewandt. Das heißt, noch bevor die restlichen Teile der Abbildung angewandt werden. Als Übertragungsfunktion eignet sich insbesondere eine sigmoide Übertragungsfunktion, wie zum Beispiel der Tangenshyperbolicus oder die logistische Funktion.

Die Abbildung lässt sich ganz oder teilweise als Neuronales Netz realisieren. Dabei werden die Eingangsgrößen über künstliche Neuronen mit der mindestens einen durch die Abbildung erzeugten Ausgangsgröße verknüpft. In dieser Ausgestaltung können die Gewichte mit den Gewichten des neuronalen Netzes identifiziert werden.

Durch die Verringerung von Gewichten von Eingangsgrößen, die einen geringen Einfluss auf die Ausgangsgrößen haben, wird insbesondere die Generalisierungsfähigkeit eines Neuronalen Netzes verbessert.

Wird das neuronale Netz in einem Lernverfahren trainiert, so werden vorzugsweise der Vergleich der erzeugten Ausgangsgröße mit der zu erzeugenden Ausgangsgröße und die Berechnung der Änderungsvorschrift aus dem Vergleich mit der Maßgabe, dass die Gewichte von Eingangsgrößen verringert werden, die einen geringen Einfluss auf die Ausgangsgröße haben, wiederholt ausgeführt, so dass man iterativ zu einer Abbildung gelangt, bei der die erzeugten Ausgangsgrößen den zu erzeugenden Ausgangsgrößen immer mehr entsprechen und die Gewichte derjenigen Eingangsgrößen weiter verringert werden, die einen geringen Einfluss auf die Ausgangsgröße haben.

Besonders bevorzugt wird dieses Verfahren mit mehreren Sätzen von Sprachmerkmale enthaltenden Eingangsgrößen und diesen Sätzen jeweils zugeordneten Sätzen mindestens einer zu erzeugenden Ausgangsgröße durchgeführt. Hierdurch kann die Abbildung weiter verfeinert bzw. das Neuronale Netz besser trainiert werden.

Liegen mehrere Sätze von Eingangsgrößen mit jeweils gleichartigen Eingangsgrößen, mindestens eine zu erzeugenden Ausgangsgröße und entsprechend mehrere Abbildungen vor, so lässt sich das Verfahren in erfindungsgemäßer Fortbildung dadurch verbessern, dass die Änderungsvorschriften für die einzelnen Abbildungen so berechnet werden, dass sich dieselben Abbildungen für unterschiedliche Sätze von Eingangsgrößen ergeben. Dies rührt daher, dass bei Sätzen gleichartiger Eingangsgrößen die Abbildungen auf die mindestens eine durch die oder eine der Abbildungen zu erzeugende Ausgangsgröße identisch sein müssen.

Dies kann zum Beispiel dadurch erreicht werden, dass alle Abbildungen identisch oder nahezu identisch initialisiert werden und danach auf alle Abbildungen nur noch identische Änderungsvorschriften angewandt werden.

Ausgehend von identisch initialisierten Änderungsvorschriften ergeben sich identische Änderungsvorschriften für alle Abbildungen zum Beispiel dadurch, dass zunächst vorläufige Änderungsvorschriften berechnet werden, bei deren Berechnung nur ein einzelner Satz von Eingangsgrößen, die zugeordnete Abbildung, die erzeugte Ausgangsgröße und die zu erzeugende Ausgangsgröße berücksichtigt wird. Diese vorläufigen Änderungsvorschriften berechnet man für alle vorgegebenen Sätze. Danach werden die Mittelwerte der vorläufigen Änderungsvorschriften ermittelt. Diese ergeben die Änderungsvorschriften, mit denen dann die Abbildungen tatsächlich geändert werden.

Auch bei diesem Verfahren lassen sich vorteilhaft Übertragungsfunktionen zum Dämpfen von Ausreißern und Neuronale Netze mit künstlichen Neuronen und Gewichten einsetzen. Diese Ausgestaltungen ergeben sich aus den Unteransprüchen.

Um Speicherplatz zu sparen, werden die identischen Abbildungen vorzugsweise am gleichen Speicherort gespeichert. Darüber hinaus können die Abbildungen einen oder mehrere gemeinsame Abbildungsteile aufweisen.

Weiterhin können die Schritte des Vergleichens der von den Abbildungen erzeugten Ausgangsgrößen mit den von den Abbildungen zu erzeugenden Ausgangsgrößen und die Schritte des Berechnens der Änderungsvorschriften für die Abbildungen aus dem Vergleich, so dass sich dieselben Abbildungen für unterschiedliche Sätze von Eingangsgrößen ergeben, wiederholt werden. So lässt sich iterativ die Abbildung mit dem kleinsten Fehler bestimmen.

Ziel der Erfindung ist es nicht nur, eine oder mehrere Abbildungen in der beschriebenen Weise zu berechnen, sondern die Abbildungen darüber hinaus auch auf Eingangsgrößen anzuwenden, von denen die durch die Abbildung zu erzeugenden Ausgangsgrößen nicht bekannt sind. Dazu wird ein Verfahren angewandt, bei dem eine in der zuvor geschilderten Weise erzeugte Abbildung verwendet wird.

Eine Anordnung, die eingerichtet ist, eines der geschilderten Verfahren auszuführen, lässt sich zum Beispiel durch entsprechendes Programmieren eines Computers oder einer Rechenanlage realisieren.

Ein Computerprogrammprodukt, das Softwarecodeabschnitte enthält, mit denen eines der geschilderten Verfahren auf einem Computer ausgeführt werden kann, lässt sich durch geeignete Implementierung des Verfahrens in einer Programmiersprache ausführen. Die Softwarecodeabschnitte werden dazu gespeichert. Dabei wird unter einem Computerprogrammprodukt das Computerprogramm als handelbares Produkt verstanden. Es kann in beliebiger Form vorliegen, so zum Beispiel auf Papier, einem Computer lesbaren Datenträgen oder über ein Netz verteilt.

Weitere wesentliche Merkmale und Vorteile der Erfindung ergeben sich aus der Beschreibung eines Ausführungsbeispiels anhand der Zeichnung. Dabei zeigt

Figur 1    den schematischen Aufbau eines Verfahrens zur Sprachverarbeitung;

Figur 2    den schematischen Aufbau eines Verfahrens zur Sprachverarbeitung mit mehreren Sätzen von Eingangsgrößen und

Figur 3    die gemäß dem Verfahren zur Sprachverarbeitung mit mehreren Sätzen von Eingangsgrößen berechneten Gewichte.

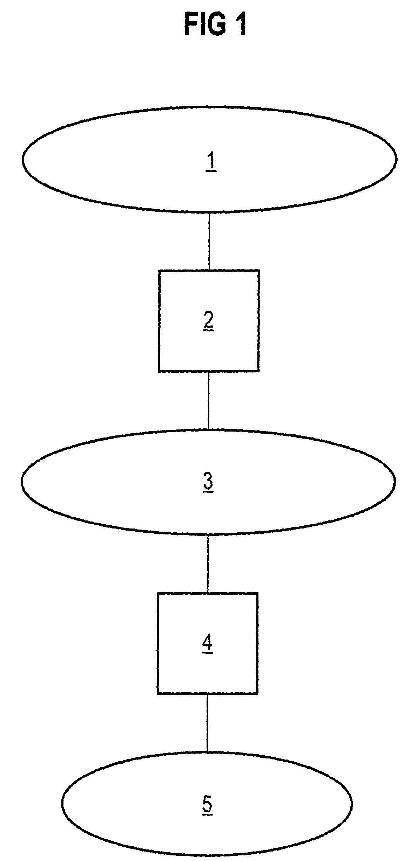

In Figur 1 erkennt man die Architektur des Verfahrens zur Sprachverarbeitung. Dabei werden 1 Sprachmerkmale enthaltenden Eingangsgrößen $x_i$ in Form eines Eingangsvektors **x** über einen Eingang 1 dem Verfahren zugeführt. Über eine Vorverarbeitungsschicht 2 werden die Eingangsgrößen gewichtet und auf transformierte Eingangsgrößen $x_i'$ in Form eines Vektors abgebildet. Die transformierten Eingangsgrößen $x_i'$ werden am Ausgang 3 der Vorverarbeitungsschicht 2 ausgegeben und einem Autoassoziator-Klassifikator-Netzwerk 4 zugeführt. Der Aufbau eines solchen Autoassoziator-Klassifikator-Netzwerks ist zum Beispiel in Achim F. Müller, Hans Georg Zimmermann und Ralf Neuneier: "Robust Generation of Symbolic Prosody by a Neural Classifier Based on autoassociators", ICASSP, 2000, beschrieben. Durch das Autoassoziator-Klassifikator-Netzwerk 4 werden die transformierten Eingangsgrößen $x_i'$ und damit auch die Eingangsgrößen $x_i$ auf die erzeugten Ausgangsgrößen $y_i$ abgebildet. Die Ausgangsgrößen $y_i$ werden schließlich am Ausgang 5 ausgegeben.

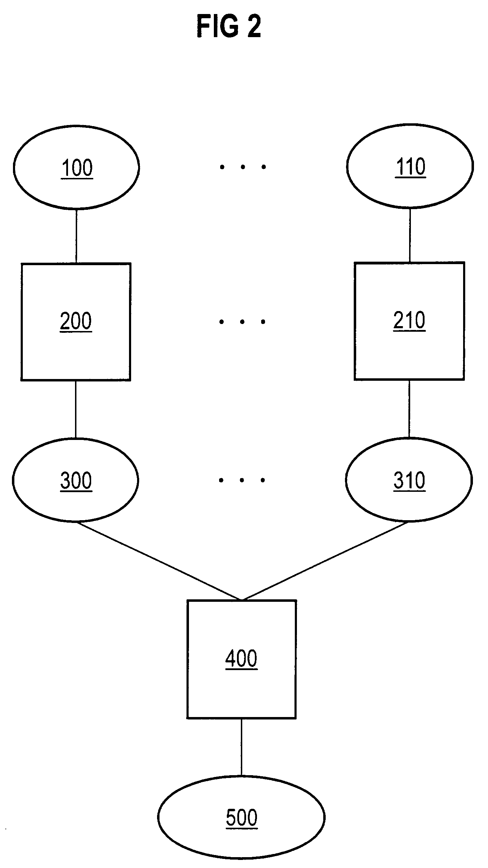

Im in Figur 1 dargestellten Ausführungsbeispiel enthält die Abbildung 2, 4 somit eine Vorverarbeitungsstufe 2 und ein Autoassoziator-Klassifikator-Netzwerk 4. Alternativ können die der Vorverarbeitungsstufe 2 zugewiesenen und im Folgenden beschriebenen Aufgaben aber auch dem Autoassoziator-Klassifikator-Netzwerk 4 zugewiesen werden. Dieses muss auch nicht als Autoassoziator-Klassifikator-Netzwerk 4 ausgebildet sein, sondern es sind je nach dem durch die Sprachverarbeitung zu lösenden Problem auch andere Neuronale Netze mit abweichenden Netzwerkarchitekturen verwendbar. Neben Neuronalen Netzen können darüber hinaus auch weitere geeignete Abbildungen eingesetzt werden, insbesondere wenn diese durch Lernverfahren trainierbar sind. Um herauszufinden, welche der 1 Eingangsgrößen $x_i$ für die spezifische Aufgabenstellung in der Sprachverarbeitung wichtig ist, ist die Vorverarbeitungsschicht 2 zwischen dem Eingang 1 und dem Autoassoziator-Klassifikator-Netzwerk 4 angeordnet. Die 1 Eingangsgrößen $x_i$ werden in dieser Vorverarbeitungsschicht 2 über eine Diagonalmatrix $\mathbf{w}_{diag}$ = diag ($w_1$ ... $w_1$) übertragen, so dass man am Ausgang 3 der Vorverarbeitungsschicht 2 die transformierten Eingangsgrößen $x_i'$ erhält.

Die Verringerung der Gewichte wird im dargestellten Ausführungsbeispiel nur auf die Gewichte der Diagonalmatrix $\mathbf{w}_{diag}$ angewandt. Dazu wird für die Neuronen der Vorverarbeitungsschicht 2 die Identitätsfunktion oder der Tangenshyperbolicus als Aktivierungsfunktion gewählt.

Zu Beginn der Trainingsphase werden alle Elemente der diagonalen Matrix $\mathbf{w}_{diag}$, das heißt alle Gewichte $w_i$, mit 1 initialisiert. Somit werden die Eingangsgrößen $x_i$ ohne Modifikation zum Autoassoziator-Klassifikator-Netzwerk 4 übertragen.

Zur Verringerung der Gewichte $w_i$ der Eingangsgrößen $x_i$, die einen geringen Einfluss auf die Ausgangsgrößen $y_i$ haben, wird nunmehr das im Folgenden beschriebene Verfahren angewandt. Zu einer Fehlerfunktion F($\mathbf{w}$) für die Vorverarbeitungsschicht 2 wird ein Strafterm P($\mathbf{w}$) hinzu addiert:

$$\tilde{F}(\mathbf{w}) = F(\mathbf{w}) + \lambda \cdot P(\mathbf{w})_{.}$$

Dabei lässt sich über die vorgebbare Verringerungsrate $\lambda$ der Einfluss des Strafterms P($\mathbf{w}$) einstellen. Eine Möglichkeit der Wahl des Strafterms P($\mathbf{w}$) ist P($\mathbf{w}$) = $\sum_k w_k^2$, mit k = 1 ... 1. Damit wird die um den Strafterm P($\mathbf{w}$) erweiterte Fehlerfunktion $\tilde{F}$ ($\mathbf{w}$) zu

$$\tilde{F}(\mathbf{w}) = F(\mathbf{w}) + \lambda \sum_k w_k^2_{.}$$

Während der Lernphase werden die Gewichte zu jedem Iterationsschritt j unter Verwendung des Gradientenabstiegsverfahrens auf der Basis dieser erweiterten Fehlerfunktion trainiert:

$$\tilde{\mathbf{w}}^{j+1} \;=\; \tilde{\mathbf{w}}^{j} - \eta \nabla \tilde{F}(\mathbf{w})$$

$$=\; \tilde{\mathbf{w}}^{j} - \nabla \left[ \eta F(\mathbf{w}) + \dot{\eta}\lambda \sum w_{\mathbf{k}}^{2} \right].$$

Dies ist die Änderungsvorschrift für die Gewichte in der Vorverarbeitungsstufe. Der Parameter η wird üblicherweise als Lernrate bezeichnet und steuert die Schrittweite, die bei der Anpassung der Gewichte verwendet wird. Vorzugsweise wird die Lernrate η und die Verringerungsrate λ in allen Schritten konstant gehalten.

Es hat sich als wichtig herausgestellt, die Verringerungsrate λ sorgfältig zu wählen. Die Verringerungsrate λ sollte üblicherweise so klein wie möglich gewählt werden. Dadurch ist der Einfluss der Lernrate η in der Änderungsvorschrift, die auf die Gewichte in der Vorverarbeitungsstufe 2 angewandt wird, größer als der Einfluss der Verringerungsrate λ. So können nichtlineare Beziehungen erfasst werden, die in den Daten verborgen sind. Auf der anderen Seite sollte die Verringerungsrate λ groß genug sein, so dass sie die Gewichte $w_i$ in der Diagonalmatrix $\mathbf{w}_{diag}$ der Vorverarbeitungsstufe 2 beeinflusst.

Nach mehreren Trainingsepochen und Anwendungen der Änderungsvorschrift auf die Gewichte $w_i$ kann man das folgende Verhalten beobachten: Für einige Gewichte ist der Einfluss der Lernrate η größer als der Einfluss der Verringerungsrate λ. Für andere Gewichte ist jedoch der Einfluss der Verringerungsrate größer als der Einfluss der Lernrate η. Durch die richtige Wahl des Verhältnisses der Verringerungsrate λ zur Verringerungsrate η können einige Gewichte auf oder nahezu auf Null verringert werden, während andere Gewichte eine nicht zu vernachlässigende Größe behalten. Die Gewichte nahe Null oder unter einem bestimmten Schwellwert werden als weniger wichtig für den Trainingserfolg des Autoassoziator-Klassifikator-Netzwerks 4 angesehen. Alle Gewichte des Autoassoziator-Klassifikator-Netzwerks werden ohne einen Strafterm P(**w**) zur gleichen Zeit wie die Gewichte in der Vorverarbeitungsstufe 2 trainiert.

Das Konzept des Hinzufügens einer Vorverarbeitungsstufe 2, die den Eingang 1 über den Ausgang 3 der Vorverarbeitungsstufe 2 mit dem neuronalen Autoassoziator-Klassifikator-Netzwerk 4 verbindet, wird durch das geschilderte Verfahren auf die Analyse von in Wortkategoriefolgen (Part-of-Speech-Sequences) angeordneten Wortkategorien (Parts-of-Speech) als Eingangsgrößen $x_i$ angewandt. Dadurch lässt sich der Einfluss bestimmter Wortkategorien auf die Phrasengrenzenvorhersage und/oder die Grundfrequenzerzeugung und insbesondere die notwendige Größe des Kontextfensters berechnen. Das Kontextfenster bestimmt, wie viele Sätze von Eingangsgrößen $x_i$ in Form von Wortkategorien für die symbolische Prosodie berücksichtigt werden müssen. Ein Satz von Eingangsgrößen wird in diesem Fall durch alle Eingangsgrößen $x_i$ gebildet, die zum gleichen Zeitpunkt t vorliegen. Eine Folge von Sätzen von Eingangsgrößen bildet damit eine Zeitreihe für diese Wortkategorien.

Figur 2 zeigt eine Architektur für das Verfahren zur Sprachverarbeitung, die vorteilhaft eingesetzt werden kann, wenn mehrere Sätze von Eingangsgrößen vorliegen, die jeweils gleichartige Eingangsgrößen enthalten. Dies ist zum Beispiel bei den gerade geschilderten Zeitreihen der Fall. Dabei wird der Eingang 100-110 in Form von Eingangsclustern ausgebildet, so dass jedes Cluster für einen Satz von Eingangsgrößen zuständig ist. Im dargestellten Beispiel wird ein Satz von Eingangsgrößen durch die jeweils zu einem Zeitpunkt gehörenden Eingangsgrößen im Kontextfenster gebildet. Im Ausführungsbeispiel wurden für das Kontextfenster fünf Zeitschritte vor und fünf Zeitschritte hinter dem aktuellen Zeitpunkt berücksichtigt. Jeder Satz von Eingangsgrößen enthält 35 Wortkategorien als Eingangsgrößen. Diese 35 Wortkategorien sind von Satz zu Satz gleichartig. Die Eingangsgrößen werden clusterweise über entsprechende Vorverarbeitungsschichten 200-210, die in ihrem Aufbau jeweils der Vorverarbeitungsschicht aus dem vorhergehenden Ausführungsbeispiel entsprechen, auf die Ausgänge 300-310 der Vorverarbeitungsschichten 200-210 übertragen. Von hier gelangen sie in ein gemeinsames Autoassoziator-Klassifikator-Netzwerk 400, aus dem sie beim Ausgang 500 ausgegeben werden. Das Autoassoziator-Klassifikator-Netzwerk 400 ist ein gemeinsamer und identischer Abbildungsteil aller Abbildungen.

Wesentlich ist nun, dass die in den Vorverarbeitungsschichten 200 bis 210 verwendeten Diagonalmatrizen von Gewichten nicht unabhängig voneinander berechnet werden. Vielmehr werden die Änderungsvorschriften für diese Matrizen so berechnet, dass sich dieselben Abbildungen für unterschiedliche, insbesondere alle, Sätze von Eingangsgrößen ergeben. Dazu werden zunächst vorläufige Änderungsvorschriften für die in den Vorverarbeitungsschichten 200-210 angewandten Gewichte berechnet, indem die Änderungsvorschriften für jeden Satz von Eingangsgrößen und den jeweiligen in einer der Vorverarbeitungsschichten 200-210 angeordneten Teil der jeweils zugeordneten Abbildung unabhängig voneinander berechnet werden. Danach wird der Mittelwert der vorläufigen Änderungsvorschriften gebildet, der eine gemeinsame Änderungsvorschrift ergibt, die dann auf die Gewichte in allen Vorverarbeitungsschichten 200-210 angewandt wird. Sind die einander entsprechenden Gewichte in den Vorverarbeitungsschichten 200-210 gleich initialisiert worden, so ergibt sich aus dieser Vorgehensweise, dass die Änderungsvorschriften für diese Gewichte so berechnet werden, dass sich dieselben Abbildungen für die unterschiedlichen Sätze von Eingangsgrößen ergeben.

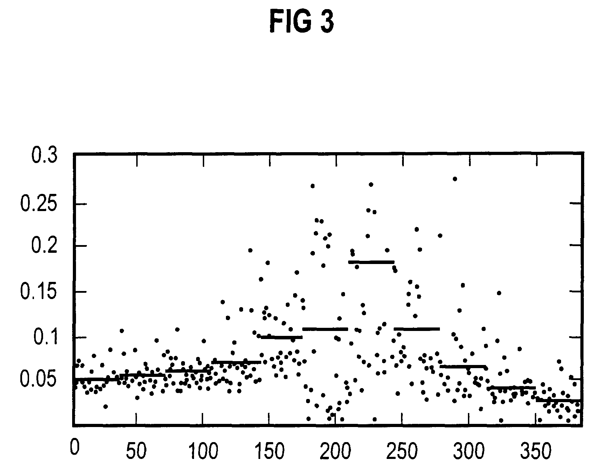

Die Ergebnisse aus Experimenten zur Bestimmung der Größe des Kontextfensters für die Phrasengrenzenvorhersage sind in Figur 3 dargestellt. Die Figur 3 zeigt die Werte der Gewichte $w_i$ in der diagonalen Matrix $\mathbf{w}_{diag}$. Dabei werden pro Zeitschritt jeweils 35 Wortkategorien berücksichtigt. Die Anzahl der Zeitschritte beträgt gemäß den obigen Ausführungen 11. Der Mittelwert der Gewichte pro Zeitschritt ist jeweils durch einen horizontalen Balken dargestellt. Der Balken für das Zentrum des Phrasengrenzenkontextfensters ist fett dargestellt. Wie man erkennen kann, ist die Position rechts neben dem Zentrum des Phrasengrenzenkontextfensters, also die zeitlich direkt nach der Phrasengrenze liegende Position, diejenige mit dem größeren Mittelwert. Das bedeutet, dass sie am wichtigsten für die Phrasengrenzenvorhersage ist. Weiterhin kann man sehen, dass die Positionen, die mehr als zwei Zeitschritte vom Zentrum entfernt sind, geringe Mittelwerte aufweisen und damit für die Phrasengrenzenvorhersage nicht relevant sind.

Dadurch dass die Gewichte von Eingangsgrößen, die einen geringen Einfluss auf die Ausgangsgröße haben, verringert werden, steigt insbesondere die Generalisierungsfähigkeit der verwendeten Abbildung und der häufig bei Neuronalen Netzen auftretende Effekt des reinen Auswendiglernens bleibt aus. Die Anwendung einer in dieser Weise erstellten Abbildung auf vorherzusagende Phrasengrenzen liefert damit deutlich bessere Ergebnisse als Abbildungen nach dem Stand der Technik.

Das Verfahren nach Figur 1 kann auch zur Analyse des Einflusses der Eingangsgrößen bei der Grundfrequenzerzeugung eingesetzt werden. Für diese Einsatzzweck wird das Autoassoziator-Klassifikator-Netzwerk 4 in Figur 1 durch ein Neuronales Netz mit Standardarchitektur für die Grundfrequenzerzeugung der zu untersuchenden Sprache ersetzt. Ein solches Netz wird beispielsweise in Tao Jianhua, Cai Lianhong, Martin Holzapfel und Herbert Tropf: "A Neural Network based Prosodic Model of Mandarin TTS System", ICSLPS, 2000, beschrieben.

Das Verfahren zur Analyse des Einflusses der Eingangsgrößen bei der Grundfrequenzerzeugung ist analog zum Verfahren für die Analyse der notwendigen Größe des Phrasengrenzenkontextfensters für die Anwendung in der symbolischen Prosodie. Die Eingangsgrößen repräsentieren allerdings in diesem Fall phonetische und linguistische Informationen. Diese sind im Gegensatz zu den Wortkategorien teilweise nicht symbolisch, sondern liegen in kontinuierlicher Form vor. Hierbei kann es vorkommen, dass einzelne Eingangsgrößen mit Ausreißern behaftet sind, das heißt, dass sie betragsmäßig sehr große Werte einnehmen können, die den Lernalgorithmus eines zu trainierenden Neuronalen Netzes stören. Um dies zu verhindern, wird vorzugsweise eine Übertragungsfunktion der Abbildung vorgeschaltet, die solche Ausreißer dämpft. Dies lässt sich zum Beispiel dadurch realisieren, dass die Aktivierungsfunktion in der Vorverarbeitungsschicht 2 als sigmoide Funktion gewählt wird.

Allen Ausführungsbeispielen liegt der Gedanke zugrunde, eine verbesserte Analyse von Sprache zu erzielen, indem unwichtige Sprachmerkmale automatisch herausgefunden und in ihrem Einfluss auf die Vorhersage zurückgedrängt werden oder indem in Zeitreihen vorhandene Informationen gemeinsam ausgewertet werden. Dabei liegt es auch im Bereich der Erfindung, die dadurch gewonnenen Erkenntnisse bei der Sprachverarbeitung anzuwenden, indem die durch das Verfahren bzw. durch eine Anordnung, die eingerichtet ist, ein entsprechendes Verfahren auszuführen, gewonnene Abbildung bei der Sprachsynthese und/oder Spracherkennung verwendet wird.

**Patentansprüche**

1. Verfahren zur Sprachverarbeitung mit einer Abbildung (2, 4, 200-210, 400) von Sprachmerkmale enthaltenden Eingangsgrößen ($x_i$) auf mindestens eine durch die Abbildung (2, 4, 200-210, 400) erzeugte Ausgangsgröße ($y_i$) und mit mindestens einer durch die Abbildung (2, 4, 200-210, 400) zu erzeugenden Ausgangsgröße, bei dem

   a) die Eingangsgrößen ($x_i$) mit unterschiedlichen Gewichten ($w_i$) auf die durch die Abbildung (2, 4, 200-210, 400) erzeugte Ausgangsgröße ($y_i$) abgebildet werden,
   b) die von der Abbildung (2, 4, 200-210, 400) erzeugte Ausgangsgröße ($y_i$) mit der von der Abbildung (2, 4, 200-210, 400) zu erzeugenden Ausgangsgröße verglichen wird,
   c) aus dem Vergleich eine Änderungsvorschrift für die Abbildung (2, 4, 200-210, 400) berechnet wird und
   d) die Änderungsvorschrift zumindest teilweise mit der Maßgabe berechnet wird, dass die Gewichte ($w_i$) von Eingangsgrößen ($x_i$) verringert werden, die einen geringen Einfluss auf die Ausgangsgröße ($y_i$) haben.

2. Verfahren nach Anspruch 1,
   bei dem die Änderungsvorschrift zumindest teilweise so berechnet wird, dass die Gewichte ($w_i$) von Eingangsgrößen ($x_i$), die einen geringen Einfluss auf die Ausgangsgröße ($y_i$) haben, in Abhängigkeit vom Wert anderer der Gewichte ($w_i$) verringert werden.

3. Verfahren nach Anspruch 2,
   bei dem die Änderungsvorschrift zumindest teilweise so berechnet wird, dass die Gewichte ($w_i$) von Eingangsgrö-

ßen ($x_i$), die einen geringen Einfluss auf die Ausgangsgröße ($y_i$) haben, um einen Wert verringert werden, der von der Summe über die Quadrate anderer der Gewichte ($w_i$) abhängt.

**4.** Verfahren nach zumindest einem der vorhergehenden Ansprüche,
bei dem die Verringerung der Gewichte ($w_i$) mit einer vorgebbaren Verringerungsrate ($\lambda$) erfolgt.

**5.** Verfahren nach zumindest einem der vorhergehenden Ansprüche,
bei dem die Abbildung (2, 4, 200-210, 400) mehrere Abbildungsschichten enthält und die Gewichte ($w_i$) bei der ersten Abbildungsschicht angeordnet sind.

**6.** Verfahren nach zumindest einem der vorhergehenden Ansprüche,
bei dem mindestens eines der Gewichte mit einem Wert, der unter einem Schwellwert liegt, auf Null gesetzt wird.

**7.** Verfahren nach zumindest einem der vorhergehenden Ansprüche,
bei dem die Abbildung (2, 4, 200-210, 400) für mindestens eine der Eingangsgrößen ($x_i$) eine Übertragungsfunktion aufweist, die für betragsmäßig große Werte der mindestens einen der Eingangsgrößen ($x_i$) eine geringe Steigung aufweist.

**8.** Verfahren nach zumindest Anspruch 7,
bei dem die Abbildung (2, 4, 200-210, 400) mehrere Abbildungsschichten (2, 4, 200-210, 400) enthält und die Übertragungsfunktion in oder nahe der ersten Abbildungsschicht (2, 200-210) angeordnet ist.

**9.** Verfahren nach zumindest Anspruch 7,
bei dem die Übertragungsfunktion eine sigmoide Übertragungsfunktion ist.

**10.** Verfahren nach zumindest einem der vorhergehenden Ansprüche,
bei dem die Abbildung (2, 4, 200-210, 400) ein neuronales Netz enthält.

**11.** Verfahren nach zumindest Anspruch 10,
bei dem die Eingangsgrößen ($x_i$) über künstliche Neuronen mit der mindestens einen durch die Abbildung (2, 4, 200-210, 400) erzeugten Ausgangsgröße ($y_i$) verknüpft werden.

**12.** Verfahren nach zumindest Anspruch 10,
bei dem die Gewichte ($w_i$) Gewichte im neuronalen Netz sind.

**13.** Verfahren nach zumindest einem der vorhergehenden Ansprüche,
bei dem die Schritte, dass

- die von der Abbildung (2, 4, 200-210, 400) erzeugte Ausgangsgröße ($y_i$) mit der von der Abbildung (2, 4, 200-210, 400) zu erzeugenden Ausgangsgröße verglichen wird,
- aus dem Vergleich die Änderungsvorschrift für die Abbildung (2, 4, 200-210, 400) berechnet wird und
- die Änderungsvorschrift zumindest teilweise mit der Maßgabe berechnet wird, dass die Gewichte ($w_i$) von Eingangsgrößen ($x_i$) verringert werden, die einen geringen Einfluss auf die Ausgangsgröße ($y_i$) haben, iterativ wiederholt werden.

**14.** Verfahren zur Sprachverarbeitung mit Abbildungen (200-210, 400) mehrerer Sätze von Sprachmerkmale enthaltenden Eingangsgrößen ($x_i$) auf mindestens eine durch eine der Abbildungen (200-210, 400) erzeugten Ausgangsgröße ($y_i$) und mit mindestens einer durch eine der Abbildungen (200-210, 400) zu erzeugenden Ausgangsgröße, insbesondere nach zumindest einem der Ansprüche 1 bis 13, bei dem

a) die von den Abbildungen (200-210, 400) erzeugte Ausgangsgröße ($y_i$) mit der von den Abbildungen (200-210, 400) zu erzeugenden Ausgangsgröße verglichen wird,
b) aus dem Vergleich Änderungsvorschriften für die Abbildungen (200-210, 400) berechnet werden,
c) die Änderungsvorschriften so berechnet werden, dass sich dieselben Abbildungen (200-210, 400) für unterschiedliche Sätze von Eingangsgrößen ($x_i$) ergeben.

**15.** Verfahren nach zumindest Anspruch 14, bei dem die Sätze von Eingangsgrößen ($x_i$) jeweils gleichartige Eingangsgrößen ($x_i$) enthalten.

**16.** Verfahren nach zumindest Anspruch 15,
bei dem die Sätze von Eingangsgrößen ($x_i$) durch eine Zeitreihe jeweils gleichartiger Eingangsgrößen ($x_i$) gebildet werden.

**17.** Verfahren nach zumindest einem der Ansprüche 14 bis 16,
bei dem vorläufige Änderungsvorschriften für die Abbildungen (200-210, 400) jeweils einzelner Sätze von Eingangsgrößen ($x_i$) berechnet werden und die Änderungsvorschriften aus Mittelwerten der vorläufige Änderungsvorschriften berechnet werden.

**18.** Verfahren nach zumindest einem der Ansprüche 14 bis 17,
bei dem zumindest eine der Abbildungen (200-210, 400) für mindestens eine der Eingangsgrößen ($x_i$) eine Übertragungsfunktion aufweist, die für betragsmäßig große Werte der mindestens einen der Eingangsgrößen ($x_i$) eine geringe Steigung aufweist.

**19.** Verfahren nach zumindest Anspruch 18,
bei dem zumindest eine der Abbildungen (200-210, 400) mehrere Abbildungsschichten (200-210, 400) enthält und die Übertragungsfunktion in oder nahe der ersten Abbildungsschicht (200-210) angeordnet ist.

**20.** Verfahren nach zumindest Anspruch 18,
bei dem die Übertragungsfunktion eine sigmoide Übertragungsfunktion ist.

**21.** Verfahren nach zumindest einem der Ansprüche 14 bis 20,
bei dem zumindest eine der Abbildungen (200-210, 400) ein neuronales Netz enthält.

**22.** Verfahren nach zumindest Anspruch 21,
bei dem die Eingangsgrößen ($x_i$) über künstliche Neuronen mit der mindestens einen durch die mindestens eine der Abbildungen (200-210, 400) erzeugten Ausgangsgröße ($y_i$) verknüpft sind.

**23.** Verfahren nach zumindest einem der vorhergehenden Ansprüche,
bei dem die Schritte, dass

- die von den Abbildungen (200-210, 400) erzeugte Ausgangsgröße mit der von den Abbildungen (200-210, 400) zu erzeugenden Ausgangsgröße verglichen werden,
- aus dem Vergleich die Änderungsvorschriften für die Abbildungen (200-210, 400) berechnet werden,
- die Änderungsvorschriften so berechnet werden, dass sich dieselben Abbildungen (200-210, 400) für unterschiedliche Sätze von Eingangsgrößen ($x_i$) ergeben, iterativ wiederholt werden.

**24.** Verfahren nach zumindest einem der Ansprüche 14 bis 23,
bei dem die Abbildungen (200-210, 400) mindestens einen gemeinsamer Abbildungsteil (400) aufweisen.

**25.** Verfahren zur Sprachverarbeitung mit einer Abbildung (2, 4, 200-210, 400) von Sprachmerkmale enthaltenden Eingangsgrößen ($x_i$) auf mindestens eine durch die Abbildung (2, 4, 200-210, 400) erzeugte Ausgangsgröße ($y_i$),
bei dem eine nach einem der Ansprüche 1 bis 24 erzeugte Abbildung (2, 4, 200-210, 400) verwendet wird.

**26.** Anordnung, die eingerichtet ist, ein Verfahren nach zumindest einem der Ansprüche 1 bis 25 auszuführen.

**27.** Computerprogrammprodukt, das Softwarecodeabschnitte enthält, mit denen ein Verfahren nach zumindest einem der Ansprüche 1 bis 25 auf einem Computer ausgeführt werden kann.

# FIG 1

# FIG 2

# FIG 3